Europäisches Patentamt

European Patent Office

Office européen des brevets

(11) Numéro de publication: **0 402 261**
**A1**

## (12) DEMANDE DE BREVET EUROPEEN

(21) Numéro de dépôt: 90401554.2

(22) Date de dépôt: 07.06.90

(51) Int. Cl.⁵: **B60T 8/52, B61H 13/38**

(30) Priorité: 07.06.89 FR 8907551

(43) Date de publication de la demande:
12.12.90 Bulletin 90/50

(84) Etats contractants désignés:
CH DE FR GB IT LI

(71) Demandeur: **SAB NIFE**
**5 Avenue Caroline**
**F-92215 Saint-Cloud(FR)**

(72) Inventeur: **Chappez, Robert**
**1, rue Fairet**
**F-92170 Vanves(FR)**

(74) Mandataire: **Santarelli, Marc**
**Cabinet Rinuy et Santarelli 14, avenue de la**
**Grande Armée**
**F-75017 Paris(FR)**

(54) Procédé pour réguler une pression dans un circuit de travail à partir d'une pression de référence, dispositif pour la mise en oeuvre de ce procédé,système de freinage et système limiteur d'effort comportant ce dispositif.

(57) On transmet à un plateau de commande mobile (6) un effort de travail résultant de la pression appliquée au circuit de travail tout en soumettant de façon antagoniste le plateau (6) à la pression de référence, et en ce qu'on ferme le circuit de travail si le plateau (6) est dans une position d'équilibre tandis que s'il est dans une position de déséquilibre, on met le circuit de travail en communication avec un conduit d'alimentation (9) ou à la vidange (21), suivant le sens du déséquilibre.

Fig.1

EP 0 402 261 A1

## Procédé pour réguler une pression dans un circuit de travail à partir d'une pression de référence, dispositif pour la mise en oeuvre de ce procédé, système de freinage et système limiteur d'effort comportant ce dispositif

L'invention a trait à un procédé et à un dispositif pour réguler une pression dans un circuit de travail à partir d'une pression de référence.

On connaît déjà un tel procédé ou dispositif dans les systèmes de freinage pour véhicules ferroviaires où la régulation se fait par comparaison entre la pression de référence (qui correspond à l'intensité désirée du freinage) et la pression dans le cylindre de frein.

Les résultats obtenus sont satisfaisants, on souhaite cependant à l'heure actuelle réduire voire éliminer grâce à des moyens électroniques complémentaires l'influence des facteurs tels que la vitesse, l'échauffement ou les conditions atmosphériques, qui nuisent à la régularité de l'effet obtenu.

L'invention vise le même but. Elle propose un procédé caractérisé en ce qu'on transmet à un plateau de commande mobile un effort de travail résultant de la pression appliquée au circuit de travail tout en soumettant de façon antagoniste le plateau à la pression de référence, et en ce qu'on ferme le circuit de travail si le plateau est dans une position d'équilibre tandis que s'il est dans une position de déséquilibre, on met le circuit de travail en communication avec un conduit d'alimentation ou à la vidange, suivant le sens du déséquilibre.

Elle propose également un dispositif pour la mise en oeuvre de ce procédé, qui se caractérise en ce qu'il comporte :
- une valve munie d'un plateau de commande mobile admettant une position d'équilibre dans laquelle la valve ferme le circuit de travail, une première position de déséquilibre où la valve met en communication le circuit de travail avec un conduit d'alimentation, et une deuxième position de déséquilibre où la valve met le circuit de travail à la vidange ; ainsi que d'une chambre pilote où s'applique la pression de référence, délimitée sur une face par le plateau de commande ; et - des moyens pour transmettre au plateau de commande un effort de travail résultant de la pression appliquée au circuit de travail, de façon antagoniste à l'effort de pression exercé sur le plateau par la pression de référence, afin que le plateau soit dans la position d'équilibre quand ledit effort de travail correspond à l'effort attendu pour la pression de référence, et dans la première ou la deuxième position de déséquilibre quand ledit effort de travail est respectivement inférieur ou supérieur à l'effort attendu.

On compare donc la pression de référence à non pas la pression dans le circuit de travail (par exemple dans le cylindre de frein), mais à une grandeur de nature différente, un effort, qui est celui réellement produit par la pression appliquée au circuit de travail (c'est-à-dire, dans l'exemple qui précède, l'effort de freinage réel) ; et en bouclant ainsi la régulation avec l'effet réellement obtenu, et non avec un effet intermédiaire, l'invention permet d'éliminer les irrégularités qui se produisaient avec les procédés et dispositifs antérieurs du fait des variations de rendement du système producteur d'effort et, dans le cas du freinage, du fait des variations du coefficient de frottement des garnitures ou semelles de frein, qu'elles soient liées à leur fabrication ou aux conditions de fonctionnement telles que vitesse, pression, échauffement, humidité ou autres agents extérieurs.

On obtient ainsi non seulement des avantages découlant de la régularité du fonctionnement, mais aussi sur le plan de l'entretien et du service des matériels en évitant· par exemple la contrainte d'avoir à sérier les lots de semelles ou garnitures de frein en fonction de leur coefficient de frottement réel pour uniformiser l'effet de freinage sur les différents freins d'un véhicule.

On observera en outre que la transformation de la pression de référence en effort par son application sur le plateau de commande et la soumission du plateau à l'effort de travail de façon antagoniste, permet de réaliser de façon particulièrement simple, fiable et économique la comparaison de grandeurs physiques de natures différentes, et en particulier qu'elle ne nécessite aucun moyen électronique.

Selon une caractéristique préférée du procédé conforme à l'invention, on transmet l'effort de travail au plateau de commande par l'intermédiaire d'un liquide et de pistons ; ou, sous l'aspect de l'invention visant un dispositif, les moyens pour transmettre au plateau un effort de travail comportent un liquide et des pistons.

Par le terme liquide, on entend toute matière déformable incompréssible telle que de l'huile ou de l'eau, mais aussi des matières plastiques convenables.

Cette caractéristique offre l'avantage de permettre d'obtenir une réduction d'effort et une multiplication de mouvement au cours de la transmission en utilisant deux pistons de sections différentes, et ceci d'une façon économique, fiable et à encombrement réduit.

Selon un mode de réalisation préféré, les moyens pour transmettre au plateau de commande un effort de travail comportent :
- une première chambre, remplie de liquide, limitée latéralement par des parois solidaires d'un élément de structure destiné à supporter un organe soumis à l'effort de travail, tandis qu'elle est limitée transversalement par une première surface, pleine, et par une deuxième surface, présentant un orifice, l'une desdites première et deuxième surfaces étant mobile avec l'organe soumis à l'effort de travail tandis que l'autre est supportée par ledit élément de structure, suivant le sens de l'effort de travail ;
- une deuxième chambre, débouchant dans la première chambre par ledit orifice de la deuxième surface ; et
- un piston relié au plateau de commande, adapté à coulisser dans la deuxième chambre et ayant une surface transversale d'extrémité en contact avec le liquide.

Ce mode de réalisation est particulièrement intéressant, car il permet en outre de la réduction d'effort et de la multiplication de mouvement précitées, un fonctionnement avec des effort qui peuvent être exclusivement de la traction ou de la compression, mais aussi indifféremment l'un ou l'autre.

On obtiendra une réduction d'effort entre l'organe de travail et le plateau de commande en prévoyant que ladite surface transversale d'extrémité du piston adaptée à coulisser dans la deuxième chambre a une valeur de surface inférieure à la valeur de surface desdites première et deuxième surfaces.

Si l'on travaille indifféremment en traction ou en compression, comme celà peut être le cas pour les freins d'un véhicule ferroviaire qui peut circuler dans les deux sens, lesdits moyens pour transmettre au plateau de commande un effort de travail, comportent :
- un corps fixe, solidaire dudit élément de structure, dans lequel est ménagé ladite première chambre dont il forme les parois latérales ;
- un corps de traction, monté à coulissement dans le corps fixe, auquel est fixé ladite valve et dans lequel est ménagé ladite deuxième chambre alors que l'une de ses parois forme ladite deuxième surface ;
.- un corps de compression, portant ladite première surface ;
lesdits corps de compression et corps de traction étant fixés chacun avec un jeu à l'organe soumis à l'effort de travail.

Mais si l'on travaille exclusivement en traction, afin d'avoir un dispositif aussi simple que possible, on prévoira que les moyens pour transmettre au plateau de commande un effort de travail, comportent un corps fixe, solidaire dudit élément de structure, dans lequel est ménagé ladite première chambre dont il forme les parois latérales et ladite première surface ; et un corps de traction, monté à coulissement dans le corps fixe, auquel est fixé ladite valve, et dans lequel est ménagé ladite deuxième chambre alors que l'une de ses parois forme ladite deuxième surface, ce corps de traction étant fixé à l'organe soumis à l'effort de travail.

Et si l'on travaille exclusivement en compression, on prévoira pour les mêmes raisons que les moyens pour transmettre au plateau de commande un effort de travail, comportent un corps fixe, solidaire dudit élément de structure, auquel est fixé ladite valve, et dans lequel sont ménagé lesdites première et deuxième chambre dont il forme les parois latérales ainsi que ladite deuxième surface de la première chambre ; et un corps de traction portant ladite première surface et fixé à l'organe soumis à l'effort de travail.

Les caractéristiques et avantages de l'invention ressortiront de la description d'exemples de réalisation, faite ci-après à titre illustratif et non limitatif en regard des dessins annexés. Sur ceux-ci :
- la figure 1 est une vue schématique en coupe d'un dispositif conforme à l'invention ;
- la figure 2 est une vue schématique en élévation, illustrant un exemple de montage du dispositif conforme à l'invention dans un système de freinage à sabot de véhicule ferroviaire ;
- la figure 3 est une vue schématique en perspective, illustrant un exemple de montage du dispositif conforme à l'invention dans un système de frein à disque avec machoire de chaque côté pour véhicule ferroviaire ; et
- la figure 4 est une vue similaire à la figure 3, illustrant une variante de montage où le dispositif est monté sur la traverse au lieu d'en-dessous.

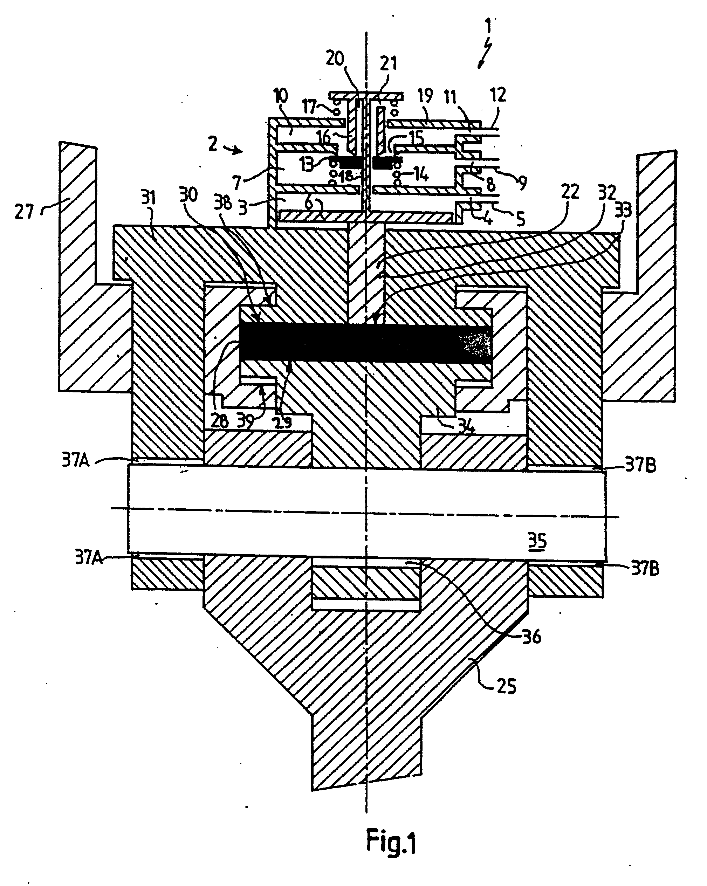

Le dispositif 1 illustré sur la figure 1 est montré en position d'équilibre.

Il comporte une valve pneumatique 2 munie d'une chambre pilote 3 comportant un orifice 4 dans lequel est monté une conduite pilote 5 dans laquelle règne une pression de référence ; d'un plateau de commande mobile 6 qui délimite sur une face la chambre pilote 3 et qui est donc soumis à la pression de référence s'y appliquant ; d'une chambre d'alimentation 7 comportant un orifice 8 dans lequel est monté une conduite d'alimentation 9 ; d'une chambre d'utilisation 10 comportant un orifice 11 dans lequel est monté une conduite 12 le reliant à un circuit d'utilisation ; d'un clapet 13 avec un ressort de rappel 14 pour obturer un orifice de communication 15 ménagé entre la chambre d'alimentation 7 et la chambre d'utilisation 10 ; et d'une tige creuse 16 avec un ressort de rappel 17, solidarisé au plateau de commande avec la tige 18, mobile à travers la paroi 19 séparant la chambre d'utilisation 10 et l'extérieur et comportant un conduit 20 débouchant à sa base et à l'extérieur par un orifice de vidange 21, ici d'échappement.

Dans la position d'équilibre illustrée, la valve 2 ferme le circuit de travail, la base de la tige creuse s'obturant sur le clapet 13 en fermant ainsi le conduit 20 tandis que le clapet 13 ferme l'orifice 15.

Dans une première position de déséquilibre, la position du plateau de commande 6 est plus basse que celle illustrée, la tige creuse 16 qui est solidaire du plateau 6 est également dans une position plus basse où elle a entraîné, en y restant appliquée, le clapet 13, ce qui a ouvert l'orifice 15, c'est-à-dire que le circuit de travail est mis en communication avec la conduite d'alimentation 9.

Dans une deuxième position de déséquilibre, la position du plateau de commande 6 est plus haute que celle illustrée, la tige creuse 16 est également dans une position plus haute, le clapet 13 se trouve dans le position illustrée où il obture l'orifice 15 mais la base de la tige creuse ne s'y applique plus, le circuit de travail est mis à la vidange par l'intermédiaire du conduit 20.

La valve 2 permet donc de conserver, augmenter ou réduire la pression dans le circuit de travail, en fonction de la position du plateau 6.

Suivant les besoins la valve 2 peut être remplacée par une valve hydraulique équivalente, la vidange ne correspondant plus alors à un échappement, mais à un retour vers le réservoir de fluide hydraulique.

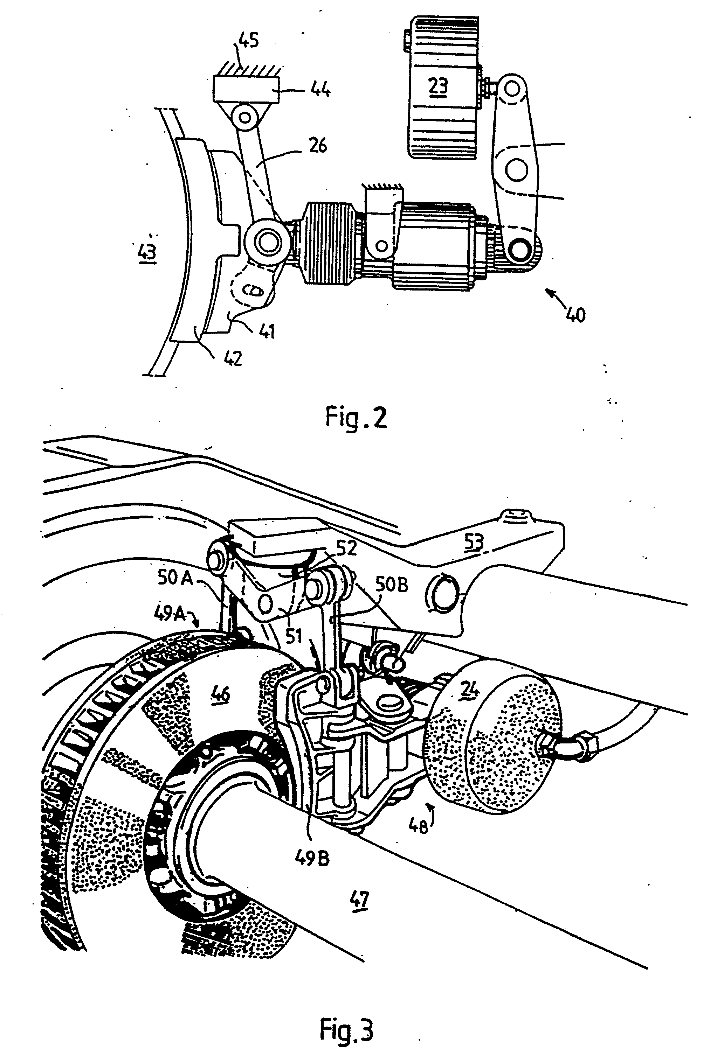

Lorsqu'on applique une pression dans le circuit de travail, qui comporte par exemple un cylindre de frein tel que les cylindres 23 où 24 illustrés sur les figures 2 à 4, il en résulte un effort de travail, qui est une effort de freinage dans l'exemple précité.

Dans le dispositif 1, cet effort est transmis au plateau de commande et s'y applique par l'intermédiaire du piston 22 sur sa face opposée à celle qui ferme la chambre pilote 3, c'est-à-dire de façon antagoniste à l'effort de pression exercé sur le plateau par la pression de référence.

Lorsque l'effort de travail correspond a l'effort attendu pour la pression de référence, le plateau mobile 6 se trouve en position d'équilibre et l'on conserve la pression existant dans le circuit de travail ; si l'effort de travail est inférieur à l'effort attendu, il y a prédominance de l'effort de pression sur le plateau 6, qui s'abaisse et passe dans la première position de déséquilibre et l'on augmente la pression dans le circuit de travail ; tandis que si l'effort de travail est supérieur à l'effort attendu, le plateau 6 s'élève et passe dans la deuxième position de déséquilibre et l'on diminue la pression dans le circuit de travail, et en définitive on régule l'effort de travail à la valeur attendue, grâce à une consigne sous forme de pression.

Les moyens pour transmettre l'effort de travail dont est muni le dispositif 1 sont destinés à être interposés entre un élément de structure, par exemple un membre du chassis du véhicule ferroviaire dans le cas de la figure 2, et un organe 25 soumis à l'effort de travail tel que la bielle de suspension 26 du sabot de frein dans ce même exemple, et que l'organe de structure est destiné à supporter.

Ces moyens de transmission comportent un corps fixe 27, solidaire de l'élément de structure, dans lequel est ménagé une chambre 28, remplie de liquide (au sens précédemment indiqué), dont le corps fixe 27 forme les parois latérales tandis que la chambre est limitée transversalement d'un côté par une surface 29, pleine, et de l'autre côté par une surface 30 présentant un orifice en son centre. Les moyens de transmission comportent également un corps de compression 34, portant la surface 29, ainsi qu'un corps de traction 31, monté à coulissement dans le corps fixe 27 autour de la chambre 28, auquel est fixé la valve 2, dont l'une des parois forme la surface 30, et dans lequel est ménagé une chambre 32 débouchant dans la chambre 28 par l'orifice de la surface 30, le piston 22 relié au plateau 6 étant adapté à coulisser dans la chambre 32 et ayant une surface transversale d'extrémité 33 en contact avec le liquide.

Les corps 31 et 34 sont fixés chacun à l'organe 25 au moyen de l'axe 35 qui les traverse tous, le montage se faisant sans jeu pour l'organe 25 alors qu'un jeu 36 et 37A, 37B est respectivement prévu pour les corps 34 et 31.

Dans la position d'équilibre illustrée, l'organe 25 est soumis à un effort de compression, c'est-à-dire à un effort s'exercant vers le haut de la figure 1. Sous l'effet d'un tel effort l'axe 35 porte sur le corps 34 qui est ainsi soumis à l'effort de travail et le communique par l'intermédiaire de sa surface 29 au liquide de la chambre 28 en créant une pression qui s'exerce sur les surfaces 30 et 33. Sous l'effet de cette pression, et grâce au jeu 37A, 37B qui permet un libre mouvement, le corps 30 vient en butée sur l'épaulement 38 du corps 27, et finalement, tant qu'il y a un effort de compression, la surface 29 est mobile avec l'organe 25 tandis que le corps 31, et donc la surface 30, est supportée par l'élément de structure.

Si l'effort de travail auquel est soumis l'organe 25 correspond à l'effort attendu, la pression qui s'exerce sur la surface 33 soumet le piston 22 à une force qui est équilibrée par la force due à l'exercice de la pression de référence sur le plateau 6 et la force du ressort de rappel 17. Le dispositif se trouve alors dans la position illustrée où la surface 30 et 33 sont sensiblement coplanaires.

Si l'effort de travail est inférieur à l'effort attendu, il y a prédominance de la force provenant de la valve, le piston 22 s'enfonce dans le liquide et la valve 2 se trouve dans la première position de déséquilibre où le circuit de travail est mis en communication avec le circuit d'alimentation ; tandis que si l'effort de travail est supérieur à l'effort attendu, le déséquilibre est en faveur de la force provenant de la pression qui s'exerce sur la surface 33, le piston 22 se soulève, et la valve 2 se trouve dans la deuxième position de déséquilibre où le circuit de travail est mis à la vidange.

Si l'organe 25 était soumis à un effort de traction, c'est-à-dire à un effort s'exerçant vers le bas de la figure 1, c'est sur le corps 31 que viendrait porter l'axe 35 et ce serait le corps 34 qui serait en butée sur le corps 27, par l'épaulement 39, c'est-à-dire que tant qu'il y a un effort de traction la surface 30 est mobile avec l'organe 25 tandis que le corps 34 et donc la surface 29 est supportée par l'élément de structure ; et, étant donné que la valve 2 est fixée sur le corps 31, le fonctionnement est similaire à celui qui vient d'être exposé pour un effort de traction.

D'une façon générale, en fonction des circonstances, les valeurs des surfaces 29, 30, 32 et celles du plateau de commande sont déterminées en fonction de l'ordre de grandeur de la pression de référence et des efforts appliqués sur l'organe 25.

Dans l'exemple illustré, qui correspond au cas le plus fréquent dans la pratique, l'effort de travail est relativement important, et la surface 33 du piston 22 a une valeur de surface largement inférieure à celle des surfaces 29 et 30, afin d'obtenir une réduction entre l'effort de travail qui s'exerce sur l'organe 25 et celui auquel est soumis le piston 22 et la valve 2, ainsi qu'une multiplication entre les déplacements respectifs de l'organe 25 et du piston 22, favorable à la sensibilité du dispositif.

On notera d'ailleurs à ce propos que les jeux 36 et 37A, 37B et surtout celui entre les corps 27 et 34, ont été exagérés sur la figure 1 pour la clarté de l'illustration.

Dans une variante non représentée des moyens pour transmettre un effort de travail au plateau de commande, où l'effort de travail est toujours un effort de compression, le corps de traction 31 est supprimé, et c'est au corps 27 qu'est fixée la valve 2, les chambres 30 et 32 y sont ménagées et il porte la surface 30, tandis que le montage de l'axe 35 se fait sans jeu dans le corps 34.

Et dans une autre variante, non représentée, où l'effort de travail est toujours un effort de traction, le corps de compression 34 est supprimé, c'est le corps fixe 27 qui porte la surface 29, et le montage de l'axe 35 dans le corps 31 se fait sans jeu.

Les figures 2 à 4 illustrent chacune un système de freinage pour véhicule ferroviaire comportant un cylindre de frein 23 ou 24, une garniture ou semelle de freinage, au moins un organe de retenue de cette garniture ou semelle et un dispositif tel que celui illustré sur la figure pour réguler la pression dans le cylindre de frein, l'effort de travail étant transmis à partir du ou des organes de retenue afin qu'il corresponde à l'effort réel de freinage.

Dans le système illustré sur la figure 2 le cylindre 23 agit par l'intermédiare d'une transmission 40 sur un sabot 41 portant une semelle ou garniture 42 agissant sur la roue 43, l'organe de retenue du sabot 41 étant une bielle de suspension 26, et un dispositif 44 similaire à celui illustré sur la figure 1 a ses moyens pour transmettre l'effort de travail interposé entre la bielle 26 et un élément de chassis 45.

Le système illustré sur la figure 3 comporte un disque 46 solidaire de l'essieu 47, et le cylindre 24 agit par l'intermédiaire d'une transmission 48 sur des machoires 49A et 49B situées sur les côtés respectifs du disque 46, portant chacune une semelle ou garniture de frein. Chaque machoire est liée à une bielle de suspension, respectivement 50A et 50B, ces bielles sont reliées par une barre 51, et un dispositif 52 similaire à celui illustré sur la figure 1 a ses moyens pour transmettre l'effort de travail interposé entre la barre 51 et une traverse 53 du chassis du véhicule, le dispositif étant monté sous la traverse.

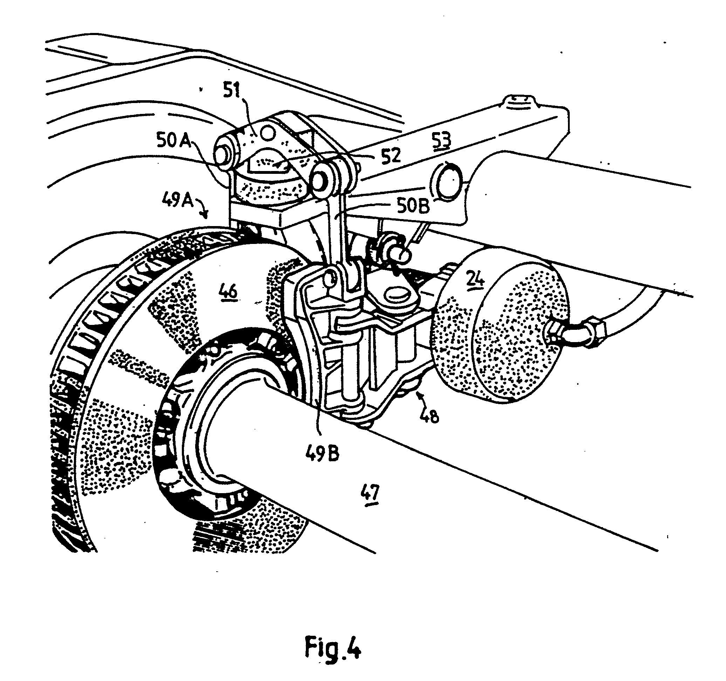

Le dispositif illustré sur la figure 4 est similaire, mais le dispositif 52 est monté au dessus de la traverse au lieu d'être en-dessous de celle-ci.

On notera que les systèmes de freinage illustrés conviennent pour des véhicules autres que les véhicules ferroviaires, notamment les véhicules routiers. Cependant, étant donné que ces derniers circulent toujours dans le même sens (à l'exception des manoeuvres de parking, faites pratiquement à l'arrêt), il est intéressant, dans un but de simplification, de remplacer les dispositifs 44 où 52 par les variantes précédemment décrites qui fonctionnent uniquement en traction ou en compression, et de préférence celle qui fonctionne uniquement en compression, qui est la plus simple à réaliser.

Le procédé et le dispositif selon l'invention, sont également utilisables dans un système de sécurité pour limiter un effort à une valeur prédéterminée, par exemple dans une presse d'emboutissage.

Bien entendu, l'invention ne se limite pas aux modes de réalisations décrits et représentés, mais englobe au contraire toutes les variantes que l'homme du métier pourra déterminer.

**Revendications**

1. Procédé pour réguler une pression dans un circuit de travail à partir d'une pression de référence, caractérisé en ce qu'on transmet à un plateau de commande mobile (6) un effort de travail résultant de la pression appliquée au circuit de travail tout en soumettant de façon antagoniste le plateau (6) à la pression de référence, et en ce qu'on ferme le circuit de travail si le plateau (6) est dans une position d'équilibre tandis que s'il est dans une position de déséquilibre, on met le circuit de travail en communication avec un conduit d'alimentation (9) ou à la vidange (21), suivant le sens du déséquilibre.

2. Procédé selon la revendication 1 caractérisé en ce qu'on transmet ledit effort de travail au plateau de commande par l'intermédiaire d'un liquide et de pistons (22, 31, 34).

3. Dispositif pour réguler une pression dans un circuit de travail à partir d'une pression de référence, caractérisé en ce qu'il comporte :
- une valve (2) munie d'un plateau de commande mobile (6) admettant une position d'équilibre dans laquelle la valve ferme le circuit de travail, une première position de déséquilibre où la valve met en communication le circuit de travail avec un conduit d'alimentation (9), et une deuxième position de déséquilibre où la valve met le circuit de travail à la vidange (21) ; ainsi que d'une chambre pilote (3) où s'applique la pression de référence, délimitée sur une face par le plateau de commande (6) ; et
- des moyens (22,27,31,34,35) pour transmettre au plateau de commande (6) un effort de travail résultant de la pression appliquée au circuit de travail, de façon antagoniste à l'effort de pression exercé sur le plateau par la pression de référence, afin que le plateau soit dans la position d'équilibre quand ledit effort de travail correspond à l'effort attendu pour la pression de référence, et dans la première ou la deuxième position de déséquilibre quand ledit effort de travail est respectivement inférieur ou supérieur à l'effort attendu.

4. Dispositif selon la revendication 3 caractérisé en ce que lesdits moyens pour transmettre au plateau de commande un effort de travail comportent un liquide et des pistons (22,31,34).

5. Dispositif selon la revendication 4 caractérisé en ce que lesdits moyens pour transmettre au plateau de commande un effort de travail comportent :
- une première chambre (28), remplie de liquide, limitée latéralement par des parois solidaires d'un élément de structure (45, 53) destiné à supporter un organe (25) soumis à l'effort de travail, tandis qu'elle est limitée transversalement par une première surface (29), pleine, et par une deuxième surface (30), présentant un orifice, l'une desdites première et deuxième surfaces étant mobile avec l'organe (25) soumis à l'effort de travail tandis que l'autre est supportée par ledit élément de structure, suivant le sens de l'effort de travail ;

- une deuxième chambre (32), débouchant dans la première chambre (28) par ledit orifice de la deuxième surface (30) ; et
- un piston (22) relié au plateau de commande (6), adapté à coulisser dans la deuxième chambre (32) et ayant une surface transversale d'extrémité (33) en contact avec le liquide.

6. Dispositif selon la revendication 5 caractérisé en ce que lesdits moyens pour transmettre au plateau de commande un effort de travail, comportent un corps fixe, solidaire dudit élément de structure, auquel est fixé ladite valve, et dans lequel sont ménagé lesdites première et deuxième chambres dont il forme les parois latérales ainsi que ladite deuxième surface de la première chambre ; et un corps de traction portant ladite première surface et fixé à l'organe soumis à l'effort de travail, celui-ci étant toujours un effort de compression.

7. Dispositif selon la revendication 5 caractérisé en ce que lesdits moyens pour transmettre au plateau de commande un effort de travail, comportent un corps fixe, solidaire dudit élément de structure, dans lequel est ménagé ladite première chambre dont il forme les parois latérales et ladite première surface ; et un corps de traction, monté à coulissement dans le corps fixe, auquel est fixé ladite valve, et dans lequel est ménagé ladite deuxième chambre alors que l'une de ses parois forme ladite deuxième surface, ce corps de traction étant fixé à l'organe soumis à l'effort de travail, celui-ci étant toujours un effort de traction.

8. Dispositif selon la revendication 5 caractérisé en ce que lesdits moyens pour transmettre au plateau de commande un effort de travail, comportent :
- un corps fixe (27), solidaire dudit élément de structure, dans lequel est ménagé ladite première chambre (28) dont il forme les parois latérales ;
- un corps de traction (31), monté à coulissement dans le corps fixe (27), auquel est fixé ladite valve (2) et dans lequel est ménagé ladite deuxième chambre (32) alors que l'une de ses parois forme ladite deuxième surface (30) ;
- un corps de compression (34), portant ladite première surface (29) ;
lesdits corps de compression et corps de traction (34,31) étant fixés chacun avec un jeu (36, 37A, 37B) à l'organe (25) soumis à l'effort de travail.

9. Dispositif selon l'une quelconque des revendications 5 à 8 caractérisé en ce que ladite surface transversale d'extrémité du piston (30) adaptée à coulisser dans la deuxième chambre (32) a une valeur de surface inférieure à la valeur de surface desdites première et deuxième surfaces (29,30).

10. Dispositif selon l'une quelconque des revendications 3 à 9 caractérisé en ce que ladite valve (2) comporte en outre une chambre d'alimentation (7) destinée à être reliée à une conduite d'alimentation (9) ; une chambre d'utilisation (10) destinée à être reliée au circuit d'utilisation ; un clapet (13) avec un ressort de rappel (14) pour obturer un orifice de communication (15) ménagé entre la chambre d'alimentation et la chambre d'utilisation ; et une tige creuse (16) avec un ressort de rappel (17), solidaire du plateau de commande (6), mobile à travers une paroi (19) séparant la chambre d'utilisation et l'extérieur, comportant un conduit (20) débouchant à sa base et à l'extérieur par un orifice de vidange (21), la base de la tige creuse (16) s'obturant sur le clapet (13) dans lesdites position d'équilibre et première position de déséquilibre alors que, respectivement, le clapet obture et n'obture pas l'orifice de communication (15) entre les chambres d'alimentation et d'utilisation, tandis que dans ladite deuxième position de déséquilibre le clapet obture ledit orifice de communication sans que la base de la tige creuse s'y obture, la chambre d'utilisation étant ainsi mise à la vidange.

11. Système de freinage, comportant un cylindre de frein (23,24), une garniture ou semelle de freinage (42) et un organe de retenue (26;50A,50B) de cette garniture ou semelle, caractérisé en ce qu'il comporte un dispositif selon l'une quelconque des revendications 3 à 10 pour réguler la pression dans le cylindre de frein, l'effort de travail étant transmis à partir dudit organe de retenue afin qu'il corresponde à l'effort réel de freinage.

12. Système selon la revendication 11 caractérisé en ce que ladite semelle ou garniture est porté par un sabot (42) tandis que l'organe de retenue est une bielle de suspension (26) du sabot, et en ce que les moyens pour transmettre l'effort de travail sont interposés entre cette bielle (26) et un élément de chassis (45).

13. Système selon la revendication 11 caractérisé en ce qu'il comporte un disque (46), une machoire de freinage (49A,49B) pour chaque côté du disque portant chacune une garniture ou semelle de freinage, une bielle de suspension (50A,50B) pour chaque machoire et une barre (51) reliant les bielles de suspension, les moyens pour transmettre l'effort de travail étant interposés entre cette barre (51) et un élément de chassis (53).

14. Système selon la revendication 13 caractérisé en ce que ledit élément de chassis est une traverse (53), et en ce que lesdits moyens pour transmettre l'effort de travail sont montés sous ou sur la traverse.

15. Système selon l'une quelconque des revendications 11 à 14 caractérisé en ce qu'il est utilisé pour un véhicule.

16. Système selon la revendication 15 caractérisé en ce que ledit véhicule est un véhicule ferroviaire.

17. Système de sécurité pour limiter un effort à une valeur prédéterminée caractérisé en ce qu'il comporte un dispositif selon l'une quelconque des revendications 3 à 10.

Fig.1

Fig.2

Fig.3

Fig.4

Office européen
des brevets

RAPPORT DE RECHERCHE EUROPEENNE

Numero de la demande

EP 90 40 1554

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | US-A-2736394 (E.E.HEWITT) <br> * le document en entier * | 1, 3 | B60T8/52 <br> B61H13/38 |
| Y | | 2, 4 | |
| A | | 10 | |
| | --- | | |
| Y | WO-A-8804625 (ALLIED CORP) <br> * abrégé; figure 1 * | 2, 4 | |
| | --- | | |
| A | US-A-3137370 (P.A.LEPELLETIER) <br> * figures 1, 5 * | 2, 4-8 | |
| | --- | | |
| A | US-A-2242854 (H.F.FLOWERS) <br> * figures 3, 5 * | 5-8 | |
| | --- | | |
| A | GB-A-2102087 (LUCAS IND) <br> * figures 1, 2 * | 11-16 | |
| | ----- | | |

| DOMAINES TECHNIQUES RECHERCHES (Int. Cl.5 ) |
|---|
| B60T <br> B61H <br> F15B |

Le présent rapport a été établi pour toutes les revendications

| Lieu de la recherche | Date d'achèvement de la recherche | Examinateur |
|---|---|---|
| BERLIN | 05 SEPTEMBRE 1990 | GERTIG I. |